(19) Europäisches Patentamt
European Patent Office
Office européen des brevets

(11) **EP 1 564 538 B1**

(12) **EUROPÄISCHE PATENTSCHRIFT**

(45) Veröffentlichungstag und Bekanntmachung des Hinweises auf die Patenterteilung:
**09.06.2010 Patentblatt 2010/23**

(51) Int Cl.:
***G01M 17/04*** *(2006.01)*

(21) Anmeldenummer: **05002972.7**

(22) Anmeldetag: **11.02.2005**

(54) **Verfahren und Vorrichtung zum Bestimmen eines Dämpfungsmasses für Schwingungen von Fahrzeugen**

Procedure and device for determining a measure of the vibration absorption of vehicles

Procédé et dispositif de détermination d'une mesure de l'amortissement des vibrations de véhicules

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **12.02.2004 DE 102004006986**

(43) Veröffentlichungstag der Anmeldung:
**17.08.2005 Patentblatt 2005/33**

(73) Patentinhaber: **MAHA Maschinenbau Haldenwang GmbH & Co. KG**
**87490 Haldenwang (DE)**

(72) Erfinder:
• **Knestel, Anton**
**87496 Hopferbach (DE)**
• **Küchle, Jürgen**
**87700 Memmingen (DE)**

(74) Vertreter: **MERH-IP**
**Matias Erny Reichl Hoffmann**
**Paul-Heyse-Strasse 29**
**80336 München (DE)**

(56) Entgegenhaltungen:
**DE-A1- 10 143 492     DE-C1- 4 439 997**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Bestimmen eines Dämpfungsmaßes für Schwingungen von Fahrzeugen, die von einem Schwingungsdämpfer gedämpft werden.

Schwingungsdämpfer sind in Kraftfahrzeugen ein für die Verkehrssicherheit wichtiges Element. Zum einen muss verhindert werden, dass die Achsmassen mit Fahrzeug- bzw. Reifenfedern in unkontrollierte Schwingungen geraten, und zum anderen sollen die Schwingungen des Fahrzeugaufbaus gedämpft werden. Zu diesem Zweck sind an den Fahrzeugachsen Stoßdämpfer vorgesehen, die zusätzlich zur Eigendämpfung der Achse, z.B. durch Reibung oder Gummilager, auftretende Schwingungen unterdrücken. Bei der Abstimmung eines Stoßdämpfers sind grundsätzlich mehrere, gegenläufige Aspekte zu berücksichtigen. Einerseits nimmt in der Regel mit zunehmender Dämpfung die Radlastschwankung ab, andererseits wird jedoch der Fahrkomfort beeinträchtigt. Umgekehrt gilt, dass bei höherem Komfort auch höhere Radlastschwankungen in Kauf genommen werden müssen, was mit verminderter Bodenhaftung einhergeht.

Um einen guten Kompromiss mit möglichst wenig Radlastschwankungen, d.h. eine gute Straßenlage, und trotzdem hohen Komfort zu erreichen, können Stoßdämpfer mit variablen, nicht gleichmäßigen Kennlinien ausgebildet werden. Beispielsweise kann die Druckstufe schwächer ausgelegt werden als die Zugstufe und/oder der Dämpfer verfügt bei kleineren Geschwindigkeiten $v_D$ der Relativbewegung der bewegten Teile im Dämpfer über eine größere Dämpfungskonstante K als bei höheren Geschwindigkeiten, d.h. die Dämpfungskonstante weist eine nichtlineare Kennlinie auf. Um die Schwingungen des Fahrzeugaufbaus besser bedämpfen zu können, werden Stoßdämpfer teilweise so ausgelegt, dass die Dämpferkraft $F_D$ bei kleinen Geschwindigkeiten stark ansteigt und ab ca. 0,1 bis 0,2 m/s flacher wird. Für die Dämpfungskonstante K eines Stoßdämpfers gilt

$$K = \frac{F_D}{v_D} \left[ \frac{N_S}{m} \right]$$

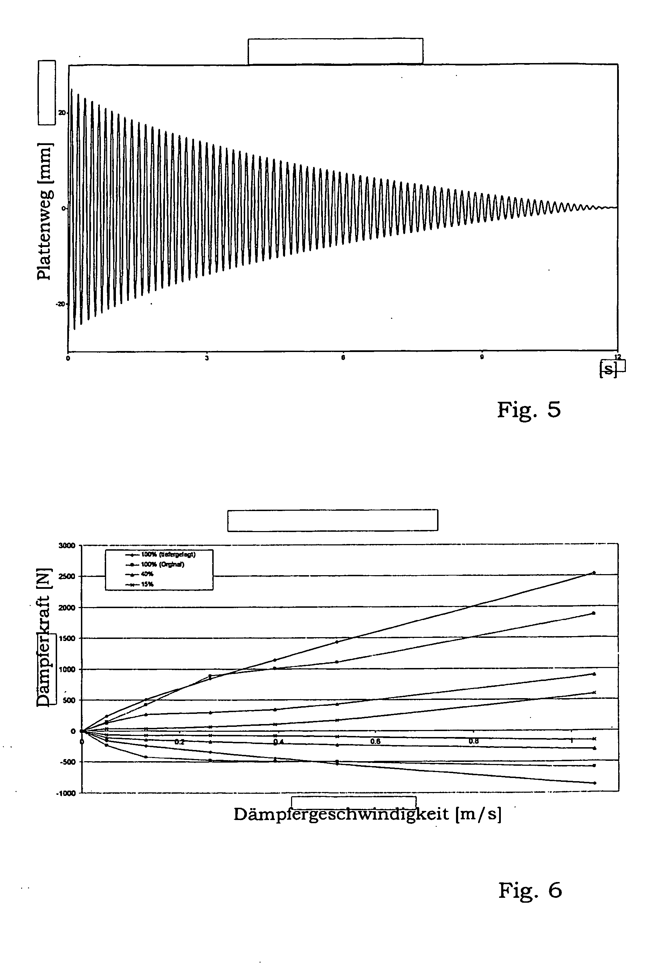

Bei derartigen nicht-linearen Dämpfern ist die Dämpfungskonstante K bei kleinen Geschwindigkeiten größer und nimmt bei größeren Geschwindigkeiten ab. Insbesondere bei Fahrzeugen, die mit Blockierverhinderungssystemen bzw. Stabilitätssystemen ausgestattet sind, ist der Einfluss der Fahrzeugdämpfung für die richtige Funktion der Fahrhilfesysteme bedeutsam. Beispiele für Stoßdämpferkennlinien sind in Fig. 6 dargestellt. Diese Figur zeigt die Dämpferkraft für die Zug- und Druckstufe eines Fahrzeugs mit unterschiedlichen, zum Teil modifizierten Stoßdämpfern, deren Dämpferwirksamkeit zwischen 100 % (neue, voll funktionsfähige Dämpfer) und 15 % (defekte Stoßdämpfer) variiert.

Zur Überprüfung der Wirkung von Kraftfahrzeug-Stoßdämpfern in eingebautem Zustand sind eine Reihe von Prüfverfahren bekannt.

In der DE 1 232 372 wird zur Überprüfung der Wirksamkeit von Schwingungsdämpfern an Fahrzeugen in eingebautem Zustand vorgeschlagen, ein Fahrzeugrad auf einer Schwing- oder Aufstandsplatte eines Prüfstandes aufzustellen und die Platte mit unterschiedlichen Frequenzen zu Schwingungen anzuregen. Die Erregung der über eine Parallelschwinge geführten Aufstandsplatte erfolgt über ein mit einem Exzenterantrieb verbundenes elastisches Element. Weiterhin ist eine Messeinrichtung vorgesehen, welche die Größe der Amplituden der Aufstandsplatte anzeigt. Bei diesem Prinzip werden das schwingungsfähige System des Fahrzeugs, bestehend aus Fahrzeugrad mit Radaufhängung, Schwingungsdämpfer und Feder, zusammen mit der Aufstandsplatte zu einer erzwungenen Schwingung angeregt. Die Drehzahl des Exzenterantriebs wird so gewählt, dass die schwingende Masse in einen Resonanzzustand gerät. Als Wert für die Dämpfungsgüte des Schwingungsdämpfers wird das Verhältnis des Wertes der Resonanzamplitude der erzwungenen Schwingung, d.h. der Amplitude der schwingenden Aufstandsplatte bei der Resonanzfrequenz des schwingungsfähigen Systems, zu der Erregeramplitude herangezogen. Dies hat jedoch den Nachteil, dass der gemessene Wert der Resonanzamplitude der erzwungenen Schwingung von vielen Einflussgrößen, z.B. der Erregung, dem elastischen Element, der Dämpfung durch Reibung usw., abhängt. Die so ermittelten Werte sind deshalb nur schwer miteinander zu vergleichen.

Um die Führung der Aufstandsplatte und den Exzenterantrieb zur Erregung des Systems von dem Fahrzeuggewicht zu entlasten, wird in der DE 101 43 492 ein weiteres elastisches Element zum Abstützen der Aufstandsplatte gegen einen Rahmen der Prüfvorrichtung vorgeschlagen. Durch das Vorsehen von so genannten Fußpunktfedern entsteht im Prüfstand neben den beiden vom Fahrzeug kommenden FederMasse-Systemen - Fahrzeugaufbaumasse mit Aufbaufeder und ungefederte Achsmasse mit Reifenfeder - ein weiteres Feder-Masse-System mit einer entsprechenden Resonanzstelle. Um eine gute Entkopplung der Schwingungen zu erhalten, wird die Prüfstandsresonanz zweckmäßigerweise ungefähr in die Mitte zwischen die beiden Fahrzeugresonanzstellen gelegt.

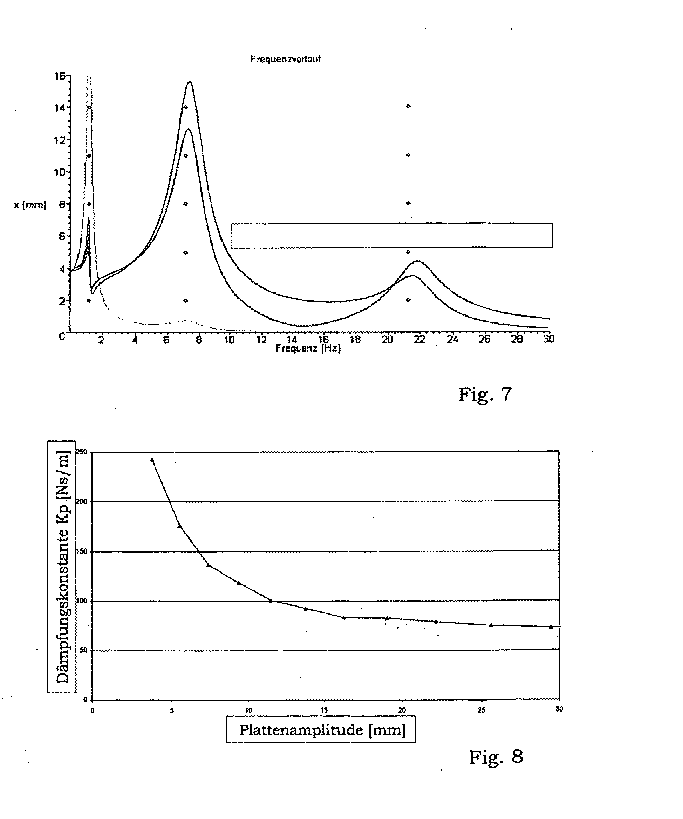

Die Fig. 7 zeigt ein Beispiel eines typischen Frequenzverlaufs der Aufbauresonanz, der Prüfstandsresonanz und der Achsresonanz (von links nach rechts). Die Amplitude der Aufbauresonanz hat einen Maximalwert zwischen 1 und 2 Hz und die Achsresonanz weist ein Maximum zwischen 12 und 20 Hz auf. Aufgrund dieser charakteristischen Werte für die Resonanzstellen von Fahrzeugen ist es zweckmäßig, den Prüfstand so auszulegen, dass die Prüfstandsresonanz zwischen dem Maximum der Aufbauresonanz und der Achsresonanz liegt (typischerweise bei ca. 7 Hz).

Wird nun dieses Feder-Masse-System z.B. durch einen Kurbeltrieb in eine erzwungene Schwingung versetzt und dabei die Resonanzfrequenz des Prüfaufbaus, welche im Wesentlichen durch das Feder-Masse-System der Aufstandsplatte bestimmt wird, durchfahren, so bildet sich eine Resonanzüberhöhung, die um so stärker ist, je schwächer das System durch den Stoßdämpfer bedämpft wird.

In der DE 44 39 997 wird erläutert, wie aus dem Verhältnis der Amplitude der erregten Schwingung im Resonanzfall zur Amplitude der Erregerschwingung das Lehr'sche Dämpfungsmaß des schwingenden Systems ermittelt und zur Beurteilung eines Schwingungsdämpfers herangezogen werden kann. Das Lehr'sche Dämpfungsmaß ist eine aus der Schwingungslehre bekannte Größe, die angibt, wie schnell eine Schwingung abklingt.

Grundsätzlich haben alle bekannten Verfahren zur Beurteilung von Schwingungsdämpfern den Nachteil, dass sie eigentlich eine durch eine Erregung erzwungene und durch den Fahrzeugdämpfer gedämpfte Schwingung eines schwingenden Systems bestehend aus Aufstandsplatte und Fahrzeugrad mit Aufhängung betrachten und auswerten. Mit anderen Worten wird, unter der Annahme eines feststehenden Fahrzeugaufbaus, die Dämpfung ermittelt, mit welcher der Fahrzeugdämpfer den Schwinger des Prüfstands (d.h. die Aufstandsplatte) bedämpft. Ein derartig ermitteltes Dämpfungsmaß ist jedoch nicht zu einer Beurteilung der eigentlich interessanteren Dämpfung geeignet, mit welcher der Stoßdämpfer den Fahrzeugaufbau bedämpft.

Es ist die Aufgabe der vorliegenden Erfindung, ein Beurteilungsmaß für die Dämpfung von Fahrzeugschwingungen durch Schwingungsdämpfer bereitzustellen, das eine zuverlässige Beurteilung der Wirksamkeit von Schwingungsdämpfern im eingebauten Zustand ermöglicht, und ein entsprechendes Verfahren und eine geeignete Vorrichtung zu dessen Ermittlung vorzusehen.

Diese Aufgabe wird erfindungsgemäß durch die unabhängigen Ansprüche gelöst. Die abhängigen Ansprüche betreffen vorteilhafte Ausführungsformen der Erfindung.

Ein erfindungsgemäßes Verfahren zum Bestimmen eines Dämpfungsmaßes für Schwingungen von Fahrzeugen kann die folgenden Schritte aufweisen.

- Erregen eines, mit einem zu beurteilenden Schwingungsdämpfer verbundenen Fahrzeugrades.
  Durch die Erregung wird das Fahrzeugrad und der Schwingungsdämpfer in eine Schwingung versetzt, wobei die auftretende Schwingung durch den Schwingungsdämpfer bedämpft wird. Vorzugsweise erfolgt eine vertikale, periodische Erregung, beispielsweise durch eine Aufstandsplatte, auf welcher das Fahrzeugrad aufsteht. Zweckmäßigerweise erfolgt die Erregung derart, dass eine Resonanz des bewegten Feder-Masse-Systems erreicht wird. Hierzu kann beispielsweise die Erregung mittels einer veränderlichen Frequenz erfolgen, die, ausgehend von einer Startfrequenz, langsam erhöht wird, bis eine entsprechende Resonanz auftritt. Selbstverständlich kann das Verfahren auch von einer höheren Frequenz ausgehen und die Erregungsfrequenz solange verringern, bis ein Resonanzeffekt auftritt.

- Erfassen der Bewegung des erregten Fahrzeugrades oder der Aufstandsplatte, auf der das Rad aufsteht.
  Zweckmäßigerweise wird die Amplitude $\hat{x}$ der erzwungenen Schwingung von Fahrzeugrad bzw. von der Aufstandsplatte mittels geeigneter Sensoren ermittelt. Diese können beispielsweise die Bewegung des Rads anhand einer daran angebrachten Markierung optisch erfassen. Da der Fahrzeugreifen durch die Reifenfeder eine Federwirkung aufweisen kann, ist es möglich, dass die Bewegungen von Radaufhängung und Schwingungsdämpfer nicht identisch mit der Bewegung der Aufstandsplatte verlaufen. Die am Schwingungsdämpfer auftretende Bewegungsamplitude kann deshalb, z.B. mittels eines Korrekturfaktors, aus der eventuell einfacher zu erfassenden Amplitude der Aufstandsplatte bestimmt werden, wobei die Federwirkung der Reifenfeder in dem Korrekturfaktor berücksichtigt werden kann. Grundsätzlich ist es für die vorliegende Erfindung möglich, sowohl die Bewegung des Rades als auch die Bewegung der Aufstandsplatte zu erfassen und auszuwerten.

- Ermitteln der Dämpfungskonstante K des Schwingungsdämpfers anhand der erfassten Bewegung des Fahrzeugrads bzw. der Aufstandsplatte.
  Dies geschieht vorzugsweise anhand des Verhältnisses A zwischen einer Amplitude r der Erregung und der erfassten Amplitude $\hat{x}_1$ der Bewegung des Fahrzeugrads bzw. der Aufstandsplatte im Resonanzfall: $A = r/\hat{x}_1$. Bei diesem Verfahrensschritt wird die Bedämpfung der erzwungenen Schwingung von Aufstandsplatte und Fahrzeugrad durch den Schwingungsdämpfer dahingehend ausgewertet, um die Dämpfungskonstante K des Schwingungsdämpfers zu ermitteln. Da die Karosseriemasse des Fahrzeugs in der Regel sehr viel größer ist als die durch die Erregung bewegte Masse, kann der Karosserieaufbau als in Ruhe (feststehend) betrachtet werden. In diesem Fall ist es zweckmäßig, von einem Ein-Massen-Schwingungs-System auszugehen. Der Zusammenhang zwischen Dämpfungskonstante K des Schwingungsdämpfers und dem Amplitudenverhältnis A kann beispielsweise über den Energieerhaltungssatz bestimmt werden. Dabei wird angenommen, dass die von der Erregung in das System eingespeiste Energie bzw. Leistung vom Schwingungsdämpfer aufgenommen und absorbiert wird.

Da vorzugsweise die Erregung des Fahrzeugrads bzw. der Aufstandsplatte über ein elastisches Element erfolgt, kann die Dämpfungskonstante K des Schwingungsdämpfers anhand der Federkonstanten D1 des elastischen Elements, des Amplitudenverhältnisses A und der Resonanzfrequenz $\omega_0$ gemäß folgender Formel ermittelt werden:

$$K = \frac{D_1 \cdot r}{\omega_0 \cdot \hat{x}_1} = \frac{D_1}{\omega_0} \cdot A$$

Die Resonanzfrequenz $\omega_0 = 2\pi \cdot f_0$ für das schwingende System kann beispielsweise durch Auswertung der Amplituden $\hat{x}_1$ bestimmt werden, da bei $\omega_0$ ein leicht zu erkennendes Maximum der Amplitude auftritt.

Zu einem ähnlichen Ergebnis gelangt man auch über eine Betrachtung der Maschinendynamik unter Berücksichtigung des Lehr'schen Dämpfungsmaßes für Schwingungen. Die Dämpfungskonstante K kann anhand der schwingenden Masse m (Masse $m_1$ der Aufstandsplatte und ungefederte Masse $m_2$ des Rads) der Federkonstanten $D_1$ des elastischen Elements der Federkonstanten $D_3$ der Fahrzeugfeder und des Amplitudenverhältnisses A ermittelt werden. Da $m_1 \gg m_2$ und $D_1 \gg D_3$ gilt, kann die Dämpfungskonstante K ohne eine explizite Kenntnis der Resonanzfrequenz des schwingenden Systems ermittelt werden:

$$K = \frac{\sqrt{D_1 m_1} \cdot r}{\hat{x}_1} = \frac{D_1 \cdot A}{\sqrt{\frac{D_1}{m_1}}}$$

In diesem Zusammenhang sei angemerkt, dass in der vorliegenden Erfindung das Lehr'sche Dämpfungsmaß für die erzwungene gemeinsame Schwingung von Aufstandsplatte und Rad nur dazu verwendet wird, die Dämpfungskonstante K des Schwingungsdämpfers zu ermitteln, während bei den bekannten Prüfverfahren nach dem Stand der Technik das Lehr'sche Dämpfungsmaß für die Dämpfung der Schwingung des Prüfstands mit dem Fahrzeugrad als abschließendes Beurteilungskriterium für den Schwingungsdämpfer des Fahrzeugs herangezogen wird.

- Ermitteln eines Dämpfungsmaßes für die Bedämpfung einer Schwingung der Fahrzeugkarosserie durch den Schwingungsdämpfer anhand der ermittelten Dämpfungskonstante K des Dämpfers.

Gemäß der vorliegenden Erfindung wird basierend auf der ermittelten Dämpfungskonstante K ein Maß für die Bedämpfung einer Fahrzeugschwingung durch den Schwingungsdämpfer bestimmt. Dieses Dämpfungsmaß ist unabhängig von den Eigenschaften des Prüfaufbaus, wie der Masse $m_1$ der Aufstandsplatte und der Federkonstante $D_1$ des elastischen Elements. Deshalb eignet sich dieses Dämpfungsmaß besser als Beurteilungsmaß für die Funktionsfähigkeit des Schwingungsdämpfers als die bekannten Dämpfungsmaße.

Vorzugsweise charakterisiert das erfindungsgemäß ermittelte Dämpfungsmaß das Abklingverhalten bzw. die Resonanzüberhöhung einer durch den Schwingungsdämpfer bedämpften Schwingung des Fahrzeugaufbaus (im Gegensatz zu der Dämpfung einer erzwungenen Schwingung von Aufstandsplatte und Fahrzeugrad wie im Stand der Technik). Ein bevorzugtes Dämpfungsmaß zur Charakterisierung des Abklingverhaltens ist das Lehr'sche Dämpfungsmaß.

Zur Beurteilung der Dämpfung von Fahrzeugschwingungen kann die Berechnung des Lehrschen Dämpfungsmaßes anhand einer anteiligen Fahrzeugmasse, mit welcher der Schwingungsdämpfer belastet wird, ausgeführt werden. Bei Fahrzeugen mit vier Rädern entspricht diese anteilige Fahrzeugmasse, die dem Fahrzeuggewicht entspricht, das sich auf das jeweilige Fahrzeugrad abstützt, ungefähr einem Viertel der gesamten Fahrzeugmasse. Um unterschiedliche Lasten zwischen den Fahrzeugachsen zu berücksichtigen kann auch die entsprechende halbe zulässige Achslast als anteilige Fahrzeugmasse herangezogen werden. Dies ist besonders vorteilhaft, da für viele Fahrzeuge die zulässige Achslast, z.B. aus dem Kraftfahrzeugschein, bekannt ist. Um den Anteil der ungefederten Massen an der zulässigen Achslast zu berücksichtigen, kann diese mit einem Faktor (beispielsweise 0,9) korrigiert werden. Die Verwendung der zulässigen Achslast hat den Vorteil, daß das Fahrzeug unter der Bedingung einer maximalen Beladung betrachtet wird und das Schwingungsverhalten für diesen Fall berücksichtigt werden kann.

Erfindungsgemäß wird das Dämpfungsmaß ermittelt, indem die tatsächliche anteilige Fahrzeugmasse $m_4$ für den zu prüfenden Schwingungsdämpfer anhand einer Messung ermittelt wird. Zur Messung der anteiligen Fahrzeugmasse $m_4$ eignet sich insbesondere eine Waage, auf die das jeweilige zu prüfende Fahrzeugrad aufgestellt wird. Hierbei ist es zweckmäßig, die ungefederten Massen $m_2$ des Rades und der Radaufhängung zu berücksichtigen, da das gemessene Gewicht der Gesamtmasse $m_4+m_2$ entspricht. Zur Vereinfachung kann hierbei angenommen werden, dass $m_2$ etwa 10 % von $m_4$ beträgt. In diesem Fall kann der gemessene Wert für die auf die Aufstandsplatte wirkende Gesamtmasse mit einem Faktor, von z.B. 0,9 korrigiert werden, um eine ausreichend genaue Abschätzung für die anteilige Fahrzeugmasse $m_4$ zu erhalten.

Erfindungsgemäß ist die Waage in die Prüfvorrichtung integriert. In diesem Fall kann der Schritt zur Ermittlung der anteiligen Fahrzeugmasse beispielsweise auf der Messung einer Absenkung der Aufstandsplatte durch die Belastung mit dem Fahrzeug erfolgen. Aufgrund der bekannten Federkonstanten der die Aufstandsplatte abstützenden Federelemente kann so die anteilige Fahrzeugmasse $m_4$ ohne zusätzlichen konstruktiven Aufwand ermittelt werden.

Bei bekannter Federkonstante $D_3$ der Fahrzeugfeder lässt sich so das Lehr'sche Dämpfungsmaß für das Fahrzeug gemäß folgender Formel:

$$\vartheta = \frac{K}{2 \cdot \sqrt{D_3 \cdot m_4}} = \frac{K}{2 \cdot m_4 \sqrt{\dfrac{D_3}{m_4}}} = \frac{K}{2 \cdot m_4 \cdot \omega_A}$$

berechnen. Da die Resonanzfrequenz $\omega_A$ des Fahrzeugaufbaus für die meisten Fahrzeuge bekannt ist bzw. sich die Resonanzfrequenzen unterschiedlicher Fahrzeuge kaum voneinander unterscheiden, ist es zweckmäßig, das Lehr'sche Dämpfungsmaß unter Berücksichtigung einer vorgegebenen festen Resonanzfrequenz $\omega_A$ für eine Schwingung des Fahrzeugaufbaus zu bestimmen. Diese kann beispielsweise einem zuvor ermittelten Katalog für den jeweilig zu prüfenden Fahrzeugtyp entnommen werden. Es ist auch möglich, verschiedene Fahrzeugtypen in Kategorien aufzuteilen und eine typische Aufbauresonanzfrequenz für die jeweilige Fahrzeugkategorie heranzuziehen.

Da das erfindungsgemäß ermittelte Dämpfungsmaß weitgehend unabhängig von den Eigenschaften der verwendeten Prüfvorrichtung ist und die Dämpfungseigenschaften für Fahrzeugschwingungen korrekt charakterisiert, kann es zur verlässlichen und reproduzierbaren Beurteilung von Schwingungsdämpfern herangezogen werden. Trotz einer unterschiedlichen Abstimmung von Fahrzeugen ermöglicht das erfindungsgemäße Dämpfungsmaß eine zuverlässige Prüfung der Funktionsfähigkeit von Stoßdämpfern, wie sie z.B. für eine Fahrzeughauptuntersuchung wünschenswert ist. Aufgrund einer empirischen Untersuchung mit verschiedenen Fahrzeugen wurde festgestellt, dass funktionsfähige Stoßdämpfer in der Regel ein Lehr'sches Dämpfungsmaß von $\vartheta > 0,2$ aufweisen.

Vorzugsweise weist das erfindungsgemäße Verfahren einen weiteren Beurteilungsschritt zum Beurteilen der Dämpfungseigenschaften des Schwingungsdämpfers auf, wobei das für den zu prüfenden Schwingungsdämpfer ermittelte Dämpfungsmaß $\vartheta$ mit einem vorgegebenen Grenzwert G verglichen wird. Unterschreitet das erfindungsgemäß ermittelte Lehr'sche Dämpfungsmaß $\vartheta$ für den Schwingungsdämpfer beispielsweise einen vorgegebenen Grenzwert G = 0,1, so ist davon auszugehen, dass der Schwingungsdämpfer nicht mehr ausreichend zu einer Bedämpfung einer Schwingung des Fahrzeugs geeignet ist und seine Funktion deshalb nicht mehr ausreichend füllt. In diesem Fall ist der Schwingungsdämpfer als defekt zu beurteilen und auszutauschen.

Um Dämpfungsverluste der Prüfvorrichtung durch Reibung bei der Ermittlung der Dämpfungskonstante K des Schwingungsdämpfers zu kompensieren, kann ein entsprechender Kompensationsschritt vorgesehen sein. Bei der Kompensation wird vorzugsweise eine korrigierte Dämpfungskonstante K' des Fahrzeugs ermittelt, indem der anhand der erfassten Bewegung des Fahrzeugrads bzw. Aufstandsplatte ermittelte Wert für die Dämpfungskonstante K mit einer Schwingungsdämpfungskonstante $K_P$ des Prüfstands korrigiert wird. In der Regel erfolgt dies durch Subtraktion der Dämpfungskonstante $K_P$ des Prüfstands von dem anhand des Schwingungsversuchs ermittelten Wert: $K' = K - K_P$.

Dieser Kompensationsschritt ist insbesondere für Fahrzeuge mit geringer Dämpfungskonstante, wie z.B. kleinere Fahrzeuge mit geringem Fahrzeuggewicht, von Vorteil, da in diesem Fall der relative Messfehler durch die Reibungsdämpfung im Prüfstand bei der Ermittlung der Dämpfungskonstante des Schwingungsdämpfers von Bedeutung ist.

Die Dämpfungskonstante $K_P$ der Prüfvorrichtung kann beispielsweise durch Erfassung der Schwingungsamplituden der unbelasteten Aufstandsplatte nach dem Abschluss der Erregung in einem Ausschwingversuch ermittelt werden. Da die Dämpfungskonstante $K_P$ der Prüfvorrichtung weitgehend konstant ist, kann sie einmal vor der eigentlichen Prüfung des Stoßdämpfers bestimmt und gespeichert werden. Zur Verbesserung der Genauigkeit kann auch ein Parameterfeld für die Dämpfungskonstante $K_P$, beispielsweise abhängig von der auf die Aufstandsplatte wirkenden Last oder der Schwingungsamplitude, ermittelt und zur Kompensation herangezogen werden. Die Auswertung des Ausschwingversuches kann beispielsweise mit Hilfe des logarithmischen Dekrements erfolgen. Auf diese Weise kann anhand von Amplitudenverhältnissen im Ausschwingversuch direkt die Abklingkonstante der Schwingung bzw. die Dämpfungskonstante $K_P$ des Prüfstands bestimmt werden.

Eine Vorrichtung zum Bestimmen eines Dämpfungsmaßes für Schwingungen von Fahrzeugen kann Erregungsmittel zum Erregen eines mit einem Schwingungsdämpfer verbundenen Fahrzeugrades, Erfassungsmittel zum Erfassen der Bewegung des erregten Fahrzeugrades, erste Berechnungsmittel zum Ermitteln einer Dämpfungskonstante K des Schwingungsdämpfers anhand der erfassten Bewegung des Fahrzeugrades und zweite Berechnungsmittel zum Ermitteln eines Dämpfungsmaßes für die Bedämpfung einer Fahrzeugschwingung durch den Schwingungsdämpfer aufweisen.

Vorzugsweise umfasst die Vorrichtung eine Aufstandsplatte, auf der das Fahrzeugrad aufsteht. Die Aufstandsplatte kann über ein elastisches Element mit einer Antriebseinheit verbunden sein, welche die Aufstandsplatte periodisch erregt. Aufgrund der Erregung führt die Aufstandsplatte eine vertikale Schwingung aus, welche auf das aufstehende Fahrzeugrad übertragen wird.

Erfassungsmittel können eine Amplitude der Bewegung der Aufstandsplatte erfassen. Dies geschieht vorzugsweise dadurch, dass an der Aufstandsplatte entsprechende Sensoren zur Ermittlung der Position bzw. Höhe der Aufstandsplatte angebracht sind. Alternativ können die Erfassungsmittel auch direkt die Bewegung des erregten Fahrzeugrades erfassen. Hierzu können entsprechende Sensoren am Rad bzw. der Radaufhängung des Fahrzeugs angebracht sein.

Die Berechnungsmittel bestimmen die Dämpfungskonstante K des Schwingungsdämpfers vorzugsweise anhand des Verhältnisses A zwischen einer Erregungsamplitude r der Antriebseinheit und der erfassten Amplitude der Bewegung des Fahrzeugrades bzw. der Aufstandsplatte im Resonanzfall. Anhand der gemessenen Amplitude der Bewegung des Feder-Masse-Systems aus Aufstandsplatte und Fahrzeugrad im Resonanzfall können die Eigenschaften des bewegten Feder-Masse-Systems, wie die Bedämpfung durch den Schwingungsdämpfer, bestimmt werden. Mittels der aus der Schwingungslehre bekannten Zusammenhänge kann so die Dämpfungskonstante K des Schwingungsdämpfers bestimmt werden.

Vorzugsweise ermitteln die Berechnungsmittel die Dämpfungskonstante K unter Berücksichtigung der Masse $m_1$ der Aufstandsplatte und der Federkonstanten $D_1$ des elastischen Elements. Auf diese Weise kann die Dämpfungskonstante K für den jeweiligen Schwingungsdämpfer des Fahrzeugs weitgehend unabhängig von den Eigenschaften der Prüfvorrichtung ermittelt werden.

Die Beurteilungsmittel bestimmen bevorzugt das Lehr'sche Dämpfungsmaß für eine Schwingung der Fahrzeugkarosserie anhand der ermittelten Dämpfungskonstante K des Schwingungsdämpfers.

Zweckmäßigerweise weist die Vorrichtung Fahrzeugmassebestimmungsmittel zum Ermitteln der anteiligen Fahrzeugmasse $m_4$ auf.

Die Aufstandsplatte der Prüfvorrichtung kann über ein weiteres elastisches Element, eine sogenannte Fußpunktfeder, abgestützt sein, um einen größeren Anteil der Fahrzeugmasse zu tragen und den Antrieb der Erregungsmittel zu entlasten. Das Vorsehen des weiteren elastischen Elements hat zudem den Vorteil, dass die Aufstandsplatte beim Auffahren des Fahrzeugs nicht so stark absinkt. Dieser Effekt kann auch zur Ermittelung der anteiligen Fahrzeugmasse $m_4$ genutzt werden, indem die Erfassungsmittel die Absenkung der Aufstandsplatte bedingt durch die Belastung mit der anteiligen Fahrzeugmasse $m_4$ erfassen. Durch eine derartige Gestaltung der Prüfvorrichtung kann die anteilige Fahrzeugmasse $m_4$ für jedes Fahrzeugrad genau bestimmt werden, ohne dass eine zusätzliche Wiegevorrichtung notwendig wird.

Die Fahrzeugmassebestimmungsmittel ermitteln die anteilige Fahrzeugmasse $m_4$ vorzugsweise unter Berücksichtigung der Federkonstanten $D_5$ des weiteren elastischen Elements und der Federkonstanten $D_1$ des elastischen Elements. Für die effektive Federkonstante D des Prüfstands gilt: $D = D_1 + D_5$.

Um die Funktionsfähigkeit des zu prüfenden Schwingungsdämpfers festzustellen, können Beurteilungsmittel die Dämpfungseigenschaften des Schwingungsdämpfers beurteilen, indem das ermittelte Dämpfungsmaß mit einem vorgegebenen Grenzwert G verglichen wird.

Zur Kompensation der Schwingungsdämpfung durch Reibung in der Prüfvorrichtung können die Berechnungsmittel eine Kompensationsvorrichtung aufweisen, welche von dem ermittelten Wert für die Dämpfungskonstante K die Dämpfungskonstante $K_P$ der Prüfvorrichtung subtrahieren, um so eine korrigierte Dämpfungskonstante K' des Schwingungsdämpfers zu erhalten.

Weitere Besonderheiten und Vorzüge der Erfindung lassen sich den Zeichnungen und der folgenden Beschreibung bevorzugter Ausführungsbeispiele entnehmen. Es zeigen:

Fig. 1 schematisch ein Ausführungsbeispiel für einen Stoßdämpferprüfstand nach der vorliegenden Erfindung,
Fig. 2 ein Schwingungsmodell für ein Fahrzeug auf einem Stoßdämpferprüfstand mit vier Massen,
Fig. 3 ein vereinfachtes Schwingungsmodell für einen Ein-Masse-Schwinger,
Fig. 4 den Amplitudenverlauf von Resonanzschwingungen bei verschiedenen Dämpfungsgraden,
Fig. 5 einen typischen Verlauf der Schwingung der Aufstandsplatte bei einem Ausschwingversuch,
Fig. 6 Beispiele für Stoßdämpferkennlinien,

Fig. 7 ein Beispiel eines typischen Frequenzverlaufs der Aufbauresonanz, der Prüfstandsresonanz und der Achsresonanz,

Fig. 8 die Abhängigkeit der Dämpfungskonstante $K_P$ des Prüfstands von der Plattenamplitude,

Fig. 9 ein Flussdiagramm für ein Verfahren zum Bestimmen eines Dämpfungsmaßes für Schwingungsdämpfer gemäß einem Ausführungsbeispiel der vorliegenden Erfindung.

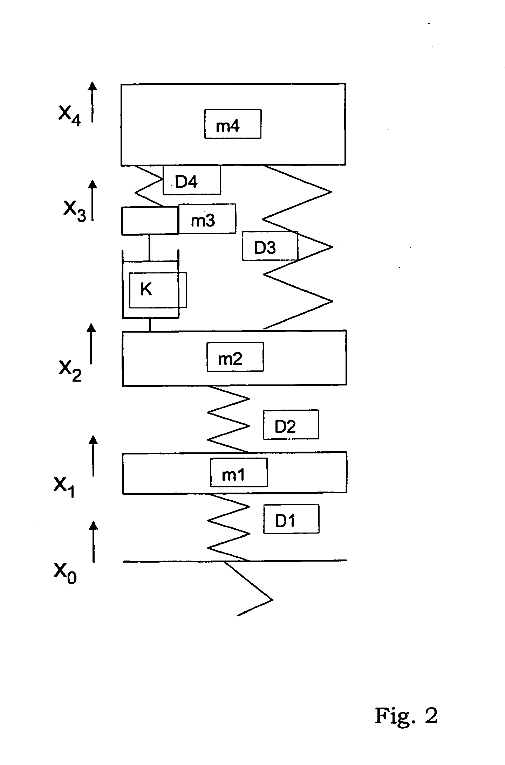

Die Fig. 2 zeigt ein Schwingungsmodell für ein Fahrzeug auf einem Stoßdämpferprüfstand mit vier Massen $m_1$ bis $m_4$, wobei $m_1$ die Masse der Aufstandsplatte des Prüfstands, $m_2$ die ungefederten Massen eines Fahrzeugrads (Radmasse, Achsmasse, Masse der Radaufhängung, usw.), $m_3$ die Masse des Stoßdämpfers und $m_4$ die anteilige Karosseriemasse des Fahrzeugs darstellt. Die jeweiligen Auslenkungen der Massen bei ihren Schwingungen werden mit $x_0$ bis $x_4$ bezeichnet, wobei $x_0$ die Auslenkung der Erregung, beispielsweise durch einen Kurbeltrieb, darstellt. Die als Federn dargestellten elastischen Elemente sind die Prüfstandsfeder zwischen Kurbeltrieb und Prüfstandsplatte, die Reifenfeder, die Fahrzeugfeder und die Federwirkung des Stoßdämpferauges. Die entsprechenden Federkonstanten werden in dieser Reihenfolge mit $D_1$ bis $D_4$ bezeichnet. Die Dämpfungskonstante des Schwingungsdämpfers des Fahrzeugs ist mit K bezeichnet.

Anhand des obern erläuterten Schwingungsmodells soll im Weiteren zuerst die Dämpfungskonstante K ermittelt werden. Hierzu wird aufgrund des Energieerhaltungssatzes angenommen, dass die vom Kurbeltrieb in das System eingespeiste Energie bzw. Leistung vom Stoßdämpfer aufgenommen wird. Hierzu wird die eingespeiste Leistung P(t) $= F_F \cdot \dot{x}_0\,(t)$ bestimmt, wobei $F_F = D_1 \cdot (x_1(t) - x_0(t))$ die vom Kurbeltrieb auf die Aufstandsplatte übertragene Kraft $F_F$ ist.

Mit der Gleichung $x_0(t) = r \cdot \cos(\omega t)$ für die Bewegung des Kurbeltriebs kann sodann die Leistung P(t) bestimmt werden. Durch Integration über eine Periode der Schwingung wird die Wirkleistung des Prüfstands

$$P_{WP} = \pi \cdot D_1 \cdot r \cdot \hat{x}_1 \cdot f \cdot \sin(\varphi_0)$$

ermittelt. Hierbei ist $\hat{x}_1$ die Amplitude der Schwingbewegung der Aufstandsplatte und f die Erregungsfrequenz. Mit $\varphi_0$ wird der Phasenwinkel zwischen der Erregungsschwingung und der Schwingung der Aufstandsplatte bezeichnet.

Für die vom Stoßdämpfer aufgenommene Leistung gilt P(t) = $F_D \cdot v_D$, wobei $F_D$ die Dämpfungskraft des Stoßdämpfers ist. Für diese gilt $F_D = v_D \cdot K$ mit $v_D = \dot{x}_3 - \dot{x}_2$ als Geschwindigkeit der bewegten Teile des Dämpfungsmechanismus.

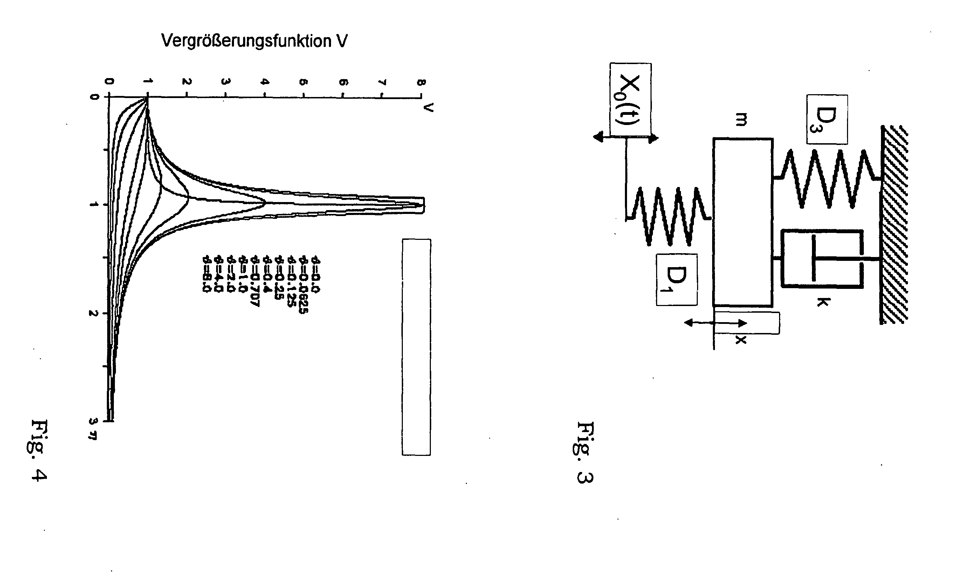

Da die Masse der Karosserie im Vergleich zu den anderen bewegten Massen sehr viel größer ist, kann angenommen werden, dass sich die Karosserie in Ruhe befindet. Weiterhin ist das Stoßdämpferauge sehr hart (d.h. $D_4$ sehr groß) und hat nur einen geringen Federweg, sodass $x_3 = x_4 = 0$ gilt. Wird weiterhin die Reifenverformung vernachlässigt (d.h. $D_2$ sehr groß; $x_2 = x_1$), so ergibt sich das in Fig. 3 dargestellte vereinfachte Schwingungsmodell für einen Ein-Masse-Schwinger. Für die schwingende Masse aus Aufstandsplattenmasse und ungefederter Masse des Fahrzeugrades gilt $m = m_1 + m_2$.

Unter Berücksichtigung der oben genanten Annahmen kann die vom Stoßdämpfer aufgenommene Leistung zu $P(t) = K \cdot \hat{x}^2 \cdot \omega^2 \sin^2(\omega t)$ berechnet werden. Wieder wird durch Integration über eine Periode der Schwingung die Wirkleistung des Stoßdämpfers bestimmt:

$$P_{WD} = 2\pi^2 \cdot K \cdot f^2 \cdot \hat{x}_1^2$$

Nach dem Energiehaltungssatz gilt: $P_{WP} = P_{WD}$. Da im Resonanzfall die schwingende Masse und die Erregung eine Phasenverschiebung $\varphi_0 = 90°$ aufweisen, kann die Dämpfungskonstante K des Schwingungsdämpfers wie folgt bestimmt werden:

$$K = \frac{D_1 \cdot r}{\omega_0 \cdot \hat{x}_1} = \frac{D_1 \cdot r}{2\pi \cdot f_0 \cdot \hat{x}_1} \qquad \text{(Formel 1)}$$

Diese Formel ermöglicht eine Berechnung der Dämpfungskonstante K des Schwingungsdämpfers anhand des Verhältnisses A zwischen der Erregungsamplitude r und der erfassten Amplitude $\hat{x}_1$ der Bewegung der Aufstandsplatte sowie unter Berücksichtigung der bekannten Federkonstante $D_1$ der Prüfstandsfeder und der Resonanzfrequenz $\omega_0 = 2\pi \cdot f_0$ des Prüfstands.

Bei Fahrzeugen mit nicht-linearer Dämpfungskennlinie gilt der ermittelte Wert für die Dämpfungskonstante K für die Bedingungen (Geschwindigkeit $v_D$, Erregungsamplitude r), unter denen die Messung vorgenommen wurde. Durch eine geeignete Auswahl der Prüfbedingungen kann jedoch die Dämpfungskonstante K für einen Stoßdämpfer mit ausreichender Genauigkeit bestimmt werden.

Die Fig. 4 zeigt den Amplitudenverlauf von Resonanzschwingungen bei verschiedenen Dämpfungsgraden. Auf der Ordinate ist die Vergrößerungsfunktion $V = \hat{x}_1 /r = 1/A$ für beschiedene Dämpfungsmaße über der normierten

Frequenz $\eta = \dfrac{f}{f_0} = \dfrac{\omega}{\omega_0}$ aufgetragen. Wie man erkennen kann, steigt die Amplitude einer gering gedämpften Schwingung im Resonanzfall stark an. Aufgrund des dargestellten Zusammenhangs zwischen einerseits dem Verhältnis der Amplituden der bewegten Masse und der Erregung im Resonanzfall und andererseits dem Dämpfungsmaß $\vartheta$ der Schwingung wird ersichtlich, wie aus dem gemessenen Amplitudenverhältnis A der Dämpfungsgrad bzw. die Dämpfungskonstante K des Schwingungssystems bestimmt werden kann.

Dabei gilt für das aus der Maschinendynamik bekannte Lehr'sche Dämpfungsmaß $\vartheta$:

$$\frac{\hat{x}}{r} = \frac{1}{2\vartheta\sqrt{1-\vartheta^2}}$$

Für schwach gedämpfte Systeme mit $\vartheta \leq 0,25$ kann dieser Zusammenhang vereinfacht werden zu:

$$\frac{\hat{x}}{r} = \frac{1}{A} = \frac{1}{2\vartheta}$$

Der Zusammenhang zwischen dem Lehr'schen Dämpfungsmaß $\vartheta$ und der Abklingkonstanten $\delta$ im Resonanzfall

mit der Eigenkreisfrequenz $\omega_0$ ergibt sich aus $\vartheta = \vartheta = \dfrac{\delta}{\omega_0}$ , wobei Abklingkonstante $\delta$ und Dämpfungskonstante K

gemäß $\delta = \dfrac{K}{2m}$ im Zusammenhang stehen.

Unter Berücksichtigung der oben angegebenen Formeln kann ganz allgemein das Lehr'sche Dämpfungsmaß für ein gedämpftes Feder-Masse-System mit der Masse m und der Federrate D gemäß folgender Gleichung ermittelt werden:

$$\vartheta = \frac{K}{2\cdot\sqrt{D \cdot m}} = \frac{K}{2\cdot m\sqrt{\dfrac{D}{m}}} = \frac{K}{2\cdot m \cdot \omega_0} .$$

Betrachtet man nun das System des Prüfstands mit schwingender Aufstandsplatte, so ergibt sich unter Vernachlässigung der ungefederten Radmasse $m_2$ ($m_2 \ll m_1$) und der Fahrzeugfeder ($D_3 \lll D_1$) für die Dämpferkonstante K des Schwingungsdämpfers folgender Zusammenhang:

$$K = \frac{\sqrt{D_1 \cdot m_1} \cdot r}{\hat{x}_1} = \frac{D_1}{\omega_0} A = \frac{D_1}{\sqrt{\dfrac{D_1}{m_1}}} A \qquad \text{(Formel 2)}$$

Wie aus dieser Gleichung ersichtlich, kann die Dämpfungskonstante K anhand des ermittelten Amplitudenverhältnisses A, der Federkonstante $D_1$ der Prüfstandsfeder und der Plattenmasse $m_1$ des Prüfstands ermittelt werden.

Wie bereits erwähnt, wird hierbei die Resonanzüberhöhung der erzwungenen Schwingung des Prüfstands dazu verwendet, die Dämpfung dieser Schwingung durch den Schwingungsdämpfer des Fahrzeugs bzw. dessen Dämpfungskonstante K zu ermitteln. Im Gegensatz zum Stand der Technik, bei dem das Dämpfungsmaß als Beurteilungskriterium für den Schwingungsdämpfer herangezogen wird, stellt dieses bei der vorliegenden Erfindung nur einen Zwischenschritt bzw. eine Zwischengröße dar.

Im nächsten Schritt wird nun das Fahrzeug ohne Prüfstand betrachtet und anhand der Fahrzeugeigenschaften das Lehr'sche Dämpfungsmaß für die Bedämpfung einer Schwingung der Fahrzeugkarosserie durch den Schwingungsdämpfer als Beurteilungsmaß ermittelt. Hierzu wird eine Schwingung des Fahrzeugaufbaus mit einer anteiligen Fahrzeugmasse $m_4$ und der Fahrzeugfeder $D_3$ betrachtet. Diese wird von dem Schwingungsdämpfer mit der nach dem obigen Verfahren ermittelten Dämpferkonstante K bedämpft. Für das Lehr'sche Dämpfungsmaß dieser Schwingung gilt:

$$\vartheta = \frac{K}{2 \cdot \sqrt{D_3 \cdot m_4}} = \frac{K}{2 \cdot m_4 \sqrt{\dfrac{D_3}{m_4}}} = \frac{K}{2 \cdot m_4 \cdot \omega_A} \qquad \text{(Formel 3)}$$

Da die Resonanzfrequenz $\omega_A$ des Karosserieaufbaus zwischen verschiedenen Fahrzeugen in der Regel keine großen Unterschiede aufweist, kann hierfür ein vorgegebener bekannter Wert angenommen werden. Dieser kann z.B. für verschiedene Fahrzeugkategorien festgelegt werden. Typische Aufbauresonanzfrequenzen für PKWs sind 1,4 Hz, für Geländefahrzeuge (SUVs) 1,6 Hz und für Transporter 1,8 Hz.

Das nach obigem Verfahren ermittelte Lehr'sche Dämpfungsmaß $\vartheta$ für das Fahrzeug stellt ein aussagekräftiges, zuverlässiges und vom Prüfstand unabhängiges Beurteilungsmaß für die Funktionsfähigkeit des Stoßdämpfers dar. Es ist deshalb möglich, einen Grenzwert festzulegen, der von Stoßdämpfern nicht unterschritten werden darf, um die Fahrsicherheit des Fahrzeugs nicht zu gefährden. Aufgrund von empirischen Untersuchungen wurde herausgefunden, dass bei funktionsfähigen Stoßdämpfern $\vartheta > 0,2$ gilt und deshalb ein möglicher Grenzwert bei G = 0,1 liegt.

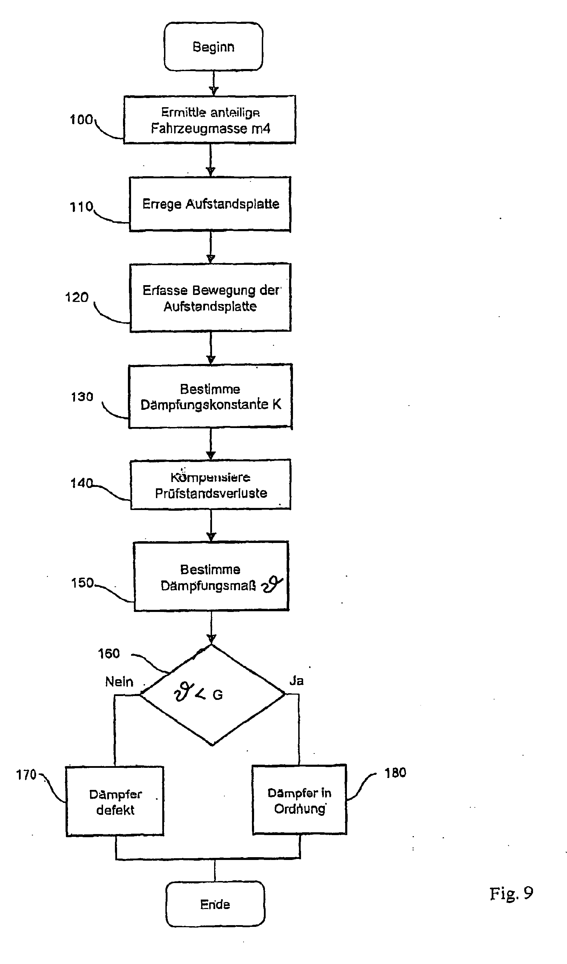

Die Fig. 9 zeigt ein Flussdiagramm für ein Verfahren zum Bestimmen eines Dämpfungsmaßes für Schwingungsdämpfer gemäß einem Ausführungsbeispiel der vorliegenden Erfindung.

In Schritt 100 wird die anteilige Fahrzeugmasse $m_4$, mit welcher der zu prüfende Schwingungsdämpfer belastet wird, ermittelt. Dies kann dadurch erfolgen, dass nach dem Auffahren des Fahrzeugs auf die Aufstandsplatte die Absenkung s der Aufstandsplatte durch die Belastung mit dem Fahrzeuggewicht bei ruhendem Erregerantrieb erfasst wird. Hierzu wird der Prüfstand wie eine Waage verwendet und die anteilige Fahrzeugmasse $m_4$ aufgrund des Federgesetztes über das entsprechende anteilige Fahrzeuggewicht $F_4 = m_4 \cdot g = D \cdot s$ bestimmt:

$$m_4 = \frac{D \cdot s}{g} \qquad \text{(Formel 4)},$$

wobei D die effektive Federkonstante des Prüfstands und g die Erdbeschleunigung ist. Für einen Prüfstand mit einer weiteren Fußpunktfeder mit einer Federkonstante $D_5$ zur Abstützung der Aufstandsplatte in dem Prüfstandrahmen gilt: $D = D_1 + D_5$. Um die ungefederten Massen $m_2$, $m_3$ zu berücksichtigen, kann der so ermittelte Wert für $m_4$ mit einem Korrekturfaktor (z.B. 0,9) korrigiert werden.

Selbstverständlich kann der Schritt zur Erfassung der anteiligen Fahrzeugmasse $m_4$ auch im Anschluss an die Erfassung der Bewegung des erregten Fahrzeugrads bzw. der Ermittlung der Dämpfungskonstante K des Schwingungsdämpfers stattfinden. In diesem Fall würde das auf der Aufstandsplatte aufstehende Fahrzeugrad zuerst zu einer erzwungenen Schwingung angeregt und anschließend würde der Wiegevorgang stattfinden.

In Schritt 110 wird das auf der Aufstandsplatte aufstehende Rad zu einer erzwungenen Schwingung erregt. Hierzu wird die Aufstandsplatte über ein elastisches Element von einer Antriebseinheit zu vertikalen Schwingungen angeregt, wobei die Anregungsfrequenz variiert wird. Um eine Resonanz des schwingenden Systems bestehend aus Aufstandsplatte und Fahrzeugrad zu erzeugen, wird beispielsweise die Drehzahl der Antriebseinheit langsam erhöht, um die Resonanzstelle zu durchfahren. Alternativ kann die Anregung auch mit einer höheren Drehzahl beginnen, die anschließend langsam erniedrigt wird, so lange bis eine Resonanz eintritt.

In Schritt 120 wird die Bewegung des erregten Fahrzeugrades bzw. der Aufstandsplatte erfasst. Hierzu kann beispielsweise eine Markierung am Fahrzeugrad vorgesehen sein, die von entsprechenden Sensoren erfasst wird. Einfacher ist es jedoch, Messaufnehmer an der Aufstandsplatte anzubringen und die Amplitude der vertikalen Bewegung der Aufstandsplatte zu erfassen. Da die Reifenfeder im Vergleich zur Prüfstandsfeder in der Regel eine größere Federkonstante $D_2$ aufweist, schwingen Fahrzeugrad und Aufstandsplatte gleichphasig, ohne dass sich das Fahrzeugrad von der Aufstandsplatte löst. Es ist deshalb in der Regel ausreichend, die Bewegung der Aufstandsplatte zu erfassen bzw. die ungefederten Massen des Fahrzeugs und die Aufstandsplatte als eine schwingende Einheit zu betrachten (siehe auch das Ein-Massen-Schwingungs-System in Fig. 3).

In Schritt 130 wird die Dämpfungskonstante K des Schwingungsdämpfers basierend auf dem in Formel 2 angegebenen Zusammenhang anhand der erfassten Bewegung des Fahrzeugrads ermittelt. Wie bereits erläutert basiert diese Berechnung auf der Auswertung des Verhältnisses zwischen der Erregungsamplitude r und der erfassten Amplitude $\hat{x}_1$ der Bewegung der Aufstandsplatte bzw. des Fahrzeugrads im Resonanzfall.

Um die durch Reibung im Prüfstand verursachte Dämpfung der Schwingung zu berücksichtigen, wird in Schritt 140 der ermittelte Wert für die Dämpfungskonstante K korrigiert. Die kompensierte Dämpfungskonstante K' des Schwingungsdämpfers ergibt sich durch Subtraktion der aus dem Prüfvorgang ermittelten Dämpfungskonstante K um die Dämpfungskonstante $K_P$ des Prüfstands: $K' = K - K_P$ . Dieser Kompensationsschritt ist hauptsächlich bei kleineren bzw. leichteren Fahrzeugen mit kleineren Dämpfungskonstanten zweckmäßig, da für diese Fahrzeuge die Prüfstandsdämpfung bis zu 15 % der gesamten Schwingungsdämpfung betragen kann.

Um die Verluste des Prüfstands zu bestimmen, kann ein Ausschwingversuch mit einem unbelasteten Prüfstand durchgeführt werden. Hierzu wird die Aufstandsplatte von der Antriebseinheit zu einer Schwingung angeregt, und nach dem Abschalten der Antriebseinheit wird der Amplitudenverlauf der gedämpften Schwingung erfasst. Die Fig. 5 zeigt einen typischen Verlauf der Schwingung der Aufstandsplatte bei einem Ausschwingversuch.

Die Auswertung des Ausschwingsversuchs erfolgt vorzugsweise mit Hilfe des logarithmischen Dekrements. Hierzu werden aus dem Ausschwingversuch die Periodendauer T = 1/f und die Amplitude $\hat{x}(t)$ zu einem Zeitpunkt t sowie die Amplituden nach n Schwingungen $\hat{x}(t + n \cdot T)$ bestimmt. Für das logarithmische Dekrement gilt:

$$\Lambda = \frac{1}{n}\ln\left(\frac{\hat{x}(t)}{\hat{x}(t + nT)}\right) = \delta \cdot T \ .$$

Aus der ermittelten Abklingkonstante $\delta$ kann so die Dämpfungskonstante $K_P$ des Prüfstands bestimmt werden: $K_P = 2\delta \cdot m_1$.

Da die Dämpfungskonstante $K_P$ des Prüfstands in der Regel von der jeweiligen Plattenamplitude abhängig ist (siehe Fig. 8), ist es zweckmäßig einen Ausschwingversuch mit der entsprechenden im Betrieb des Prüfstands zu erwartenden Plattenamplitude durchzuführen. Es ist auch möglich, vorab die jeweiligen Dämpfungskostanten $K_P$ für unterschiedliche Plattenamplituden und/oder Fahrzeuggewichte zu ermitteln und bei der Korrektur der Schwingungsdämpferkonstante die entsprechende Prüfstandsdämpfungskostante $K_P$ für die Messbedingung (z.B. Plattenamplitude) heranzuziehen. In jedem Fall können die Dämpfungskostante bzw. die Dämpfungskostanten $K_P$ des Prüfstands vorab bei der Einrichtung und Kalibrierung des Prüfstands ermittelt und gespeichert (z.B. in einem Parameterfeld) werden und sind so bei der Durchführung des Prüfverfahrens für einen Schwingungsdämpfer bereits vorhanden.

In Schritt 150 wird anhand der Formel 3 das Lehr'sche Dämpfungsmaß für die Schwingung des Fahrzeugaufbaus anhand der korrigierten Dämpfungskonstante K' bestimmt. Hierzu ist es in der Regel ausreichend eine fest vorgegebene Resonanzfrequenz $\omega_A$ für die Schwingung des Fahrzeugaufbaus anzunehmen. Weiterhin geht die in diesem Beispiel in Schritt 100 ermittelte anteilige Fahrzeugmasse $m_4$ in die Berechnung ein. Das ermittelte Dämpfungsmaß $\vartheta$ kann als Beurteilungskriterium für die Resonanzüberhöhung bzw. Dämpfung der Schwingung des Fahrzeugaufbaus herangezogen werden.

In Schritt 160 wird das ermittelte Dämpfungsmaß $\vartheta$ mit einem vorgegebenen Schwellwert G, beispielsweise 0,1, verglichen. Untersuchungen haben gezeigt, dass die Stoßdämpfer von neuwertigen Fahrzeugen sowie funktionsfähige Stoßdämpfer von älteren Fahrzeugen in der Regel diesen Grenzwert überschreiten.

Ergibt die Prüfung in Schritt 160, dass das Lehr'sche Dämpfungsmaß des Schwingungsdämpfers den vorgegebenen Grenzwert G überschreitet, so wird der Schwingungsdämpfer in Schritt 180 als funktionsfähig erklärt.

Anderenfalls wird der geprüfte Schwingungsdämpfer in Schritt 170 zu einem defekten Schwingungsdämpfer erklärt, worauf gegebenenfalls entsprechende Maßnahmen eingeleitet werden können.

Im Folgenden soll anhand einer Beispielrechnung die Wirkungsweise des erfindungsgemäßen Stoßdämpferprüfstands nochmals verdeutlicht werden. Dazu werden für einen Beispielsprüfstand folgende Werte angenommen:

Masse der Aufstandsplatte $m_2$ = 100 kg,

Effektive Federkonstante des Prüfstands $D = 100.000 \dfrac{N}{m}$

Radius des Kurbeltriebs r = 10 mm.

Wird bei einer Prüfung mit einem Fahrzeug eine Resonanzamplitude $\hat{x}_1$ = 30 mm erreicht, so lässt sich aus diesen Werten die Dämpfungskonstante K des Schwingungsdämpfers ermitteln (Formel 2):

$$K = \frac{\sqrt{100000\dfrac{N}{m} \cdot 100 kg \cdot 10 mm}}{30 mm} = 1054 \frac{Ns}{m}$$

Die anteilige Fahrzeugmasse $m_4$ wird anhand der Absenkung der Prüfstandsplatte um s = 20 mm beim Befahren des Prüfstands mit dem Fahrzeug bestimmt (Formel 4):

$$m_4 = \frac{100000\dfrac{N}{m} \cdot 0{,}020m}{9{,}81\dfrac{m}{s^2}} = 203{,}8 kg$$

Mit der so erhaltenen Dämpfungskonstante K und der anteiligen Fahrzeugmasse $m_4$ wird unter der Annahme einer Aufbaufrequenz $f_A$ = 1,4 Hz das Lehr'sche Dämpfungsmaß ermittelt (Formel 3):

$$\vartheta = \frac{1054\dfrac{Ns}{m}}{2 \cdot 203{,}8 kg \cdot 8{,}8 s^{-1}} = 0{,}289$$

Auf diese Weise erhält man ein Beurteilungskriterium, das nicht nur den Dämpfer, sondern die gesamte Dämpfungsgüte für Schwingungen am Fahrzeug widerspiegelt.

Das erläuterte Verfahren zum Bestimmen eines Dämpfungsmaßes für Schwingungen von Fahrzeugen ist somit zum Prüfen von eingebauten Stoßdämpfern von Kraftfahrzeugen geeignet und kann beispielsweise im Rahmen einer Fahrzeughauptuntersuchung eingesetzt werden. Der große Vorteil gegenüber bekannten Verfahren liegt darin, dass ein aussagekräftiges, zuverlässiges Beurteilungsmaß für die Funktionsfähigkeit von Stoßdämpfern ermittelt werden kann, welches unabhängig von zu prüfendem Fahrzeugtyp und den Eigenschaften des verwendeten Prüfstands ein verlässliches Beurteilungsmaß liefert.

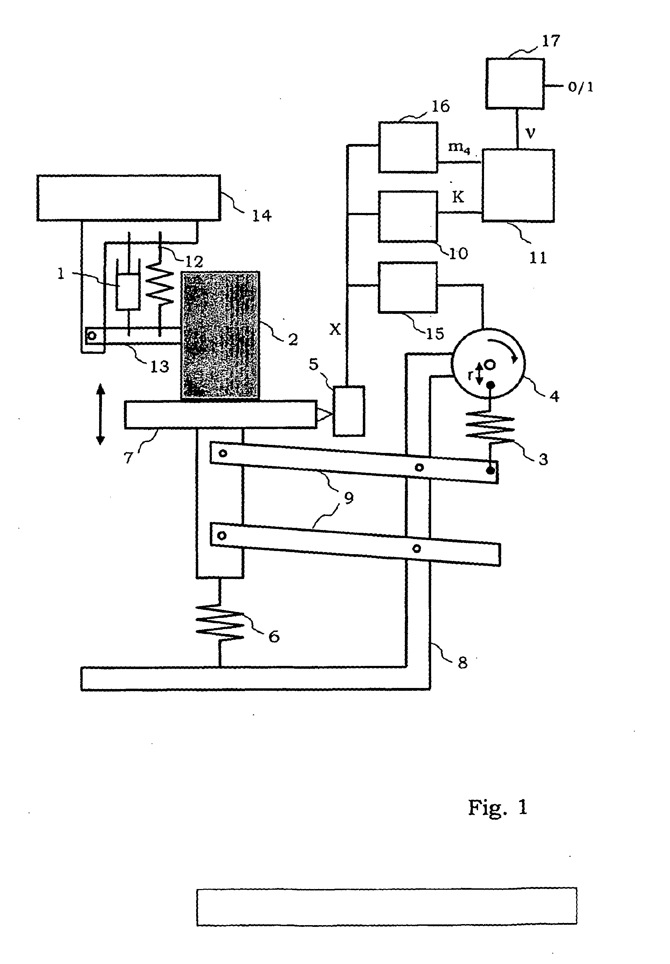

Die Fig. 1 zeigt schematisch ein Ausführungsbeispiel für einen Stoßdämpferprüfstand nach der vorliegenden Erfindung.

Von dem auf dem Prüfstand aufstehenden Fahrzeug, sind schematisch ein Schwingungsdämpfer 1, ein Fahrzeugrad 2, eine Fahrzeugfeder 12, eine Radaufhängung 13 und eine Karosserie des Fahrzeugs 14 gezeigt. Gemäß dem Schwingungsmodell aus Fig. 2 entspricht dem Schwingungsdämpfer 1 die Dämpfungskonstante K, der Fahrzeug-feder 12 die Federkonstante $D_3$, der Radaufhängung 13 die ungefederte Radmasse $m_2$ und der symbolisch dargestellten Karosserie 14 die anteilige Karosseriemasse $m_4$.

Der Stoßdämpferprüfstand weist eine Aufstandsplatte 7, einen Rahmen 8, eine Doppelschwinge 9, eine Antriebseinheit 4 und ein erstes elastisches Element 3 auf. Die Aufstandsplatte 7 ist über die Doppelschwinge 9 und das erste elastische Element 3 mit der Antriebseinheit 4 verbunden, welche als Kurbeltrieb wirkt und die Aufstandsplatte 7 sowie das Fahrzeugrad 2 in Schwingung versetzt. Eine Steuereinheit 15 steuert die Drehzahl der Antriebseinheit 4 derart, dass das schwingende System in Resonanz gerät.

Ein weiteres elastisches Element 6 (Fußpunktfeder) unterstützt die Aufstandsplatte 7 und trägt einen großen Teil des Fahrzeuggewichts (typischerweise zwischen 60 und 90 %), um ein zu starkes Absinken der Aufstandsplatte 7 bei der Belastung mit dem Fahrzeug zu vermeiden.

In der Nähe der Aufstandsplatte 7 sind Erfassungsmittel 5 vorgesehen, welche die Bewegung der Aufstandsplatte 7 erfassen und ein entsprechendes Signal X an Berechnungsmittel 10, 11, Fahrzeugmassebestimmungsmittel 16 und die Steuereinheit 15 liefern. In der Steuereinheit 15 kann dieses Signal X dazu genutzt werden, um festzustellen, dass die richtige Drehzahl für eine Resonanz des schwingenden Systems erreicht ist.

Fahrzeugmassebestimmungsmittel 16 ermitteln bei abgeschalteter Erregung anhand der Absenkung s der Aufstandsplatte 7 beim Auffahren des Fahrzeugs und der effektiven Federkonstanten D die anteilige Fahrzeugmasse $m_4$.

Die ersten Berechungsmittel 10 bestimmen anhand der Amplitude $\hat{x}_1$ der Aufstandplatte 7 im Resonanzfall ($\omega = \omega_0$) und der bekannten Erregungsamplitude r die Dämpfungskostante K des Schwingungsdämpfers 1 (Formel 2), welche gegebenenfalls mit einer zuvor ermittelten Dämpfungskonstante $K_P$ des Prüfstands korrigiert werden kann.

Die zweiten Berechnungsmittel 11 ermitteln anschließend das Lehr'sche Dämpfungsmaß $\vartheta$ für eine Schwingung des Fahrzeugaufbaus basierend auf der anteiligen Fahrzeugmasse $m_4$ und der Dämpfungskonstante K des Schwingungsdämpfers 1 (Formel 3).

Anhand eines Vergleichs des ermittelten Dämpfungsmaßes $\vartheta$ mit einem vorgegebenen Grenzwert G wird von den Beurteilungsmitteln 17 die Funktionsfähigkeit des Schwingungsdämpfers 1 beurteilt und ein entsprechendes binäres Prüfsignal erzeugt, welches mit "0" anzeigt, dass der Schwingungsdämpfer 1 das Prüfkriterium nicht erfüllt, und mit "1" anzeigt, dass der Prüfschwingungsdämpfer 1 die Prüfung bestanden hat.

**Patentansprüche**

1. Verfahren zum Bestimmen eines Dämpfungsmaßes für Schwingungen von Fahrzeugen, mit den Schritten:

   - Erregen eines mit einem zu beurteilenden Schwingungsdämpfer (1) verbundenen Fahrzeugrads (2) und Durchfahren eines Frequenzverlaufs zur Bestimmung der Prüfstandsresonanz zur Ermittelung einer Dämpfungskonstante K anhand des Verhältnisses zwischen einer Amplitude r der Erregung und einer erfassten Amplitude $\hat{x}$ der Bewegung des Fahrzeugrads (2) bzw. der Aufstandsplatte (7) im Resonanzfall, und
   - Ermitteln des Lehr'schen Dämpfungsmaßes $\vartheta$ für die Bedämpfung einer Schwingung der Fahrzeugkarosserie durch den Schwingungsdämpfer (1) anhand der ermittelten Dämpfungskonstante K des Schwingungsdämpfers (1) und einer anteiligen Fahrzeugmasse $m_4$, die auf den Schwingungsdämpfer (1) wirkt und eines vorgegebenen Werts für die Resonanzfrequenz des Karosserieaufbaus, wobei die anteilige Fahrzeugmasse $m_4$ auf eine der beiden folgenden Arten bestimmt wird:
   - basierend auf einer Messung einer Absenkung s einer Aufstandsplatte (7), verursacht durch die Belastung mit dem Fahrzeuggrad (2), oder
   - basierend auf der halben zulässigen Achslast.

2. Verfahren nach Anspruch 1, wobei das Fahrzeugrad (2) auf der periodisch erregten Aufstandsplatte (7) aufsteht, eine Bewegung der Aufstandsplatte (7) erfasst wird und anhand der erfassten Bewegung der Aufstandsplatte (7) die Bewegung des erregten Fahrzeugrads (2) ermittelt wird.

3. Verfahren nach Anspruch 1 oder 2, wobei die Erregung des Fahrzeugrads (2) über ein elastisches Element (3) erfolgt, wobei ein weiteres elastisches Element (6) vorgesehen ist, und die Dämpfungskonstante K unter Berücksichtigung der schwingenden Masse m, insbesondere der Masse $m_1$ der Aufstandsplatte (7), und der Federkonstanten der elastischen Elemente (3 u. 6) ermittelt wird.

4. Verfahren nach einem der Ansprüche 1-3, wobei Resonanzfrequenzen $\omega_A$ für Schwingungen des Fahrzeugaufbaus für unterschiedliche Fahrzeugkategorien bestimmt, gespeichert und zur Ermittlung des Lehr'schen Dämpfungsmaßes $\vartheta$ verwendet werden.

5. Verfahren nach einem der Ansprüche 1-4 mit einem Beurteilungsschritt zum Beurteilen der Dämpfungseigenschaften des Schwingungsdämpfers (1), wobei das ermittelte Dämpfungsmaß mit einem Grenzwert G verglichen wird.

6. Verfahren nach einem der Ansprüche 1-5 mit einem Schritt zum Korrigieren des ermittelten Wertes für die Dämpfungskonstante K unter Berücksichtigung einer Dämpfung, mit der eine Prüfvorrichtung Schwingungen der Aufstandsplatte (7) dämpft.

**7.** Verfahren nach einem der vorstehenden Ansprüche mit einem Schritt zur Ermittlung der Dämpfungskonstanten $K_P$ der Prüfvorrichtung durch Erfassung der Amplitudenwerte der abklingenden Schwingung der unbelasteten Aufstandsplatte (7) nach dem Abschluss der Erregung, insbesondere mittels des logarithmischen Dekrements von erfassten Schwingungsamplituden.

**8.** Vorrichtung zum Bestimmen eines Dämpfungsmaßes für Schwingungen von Fahrzeugen, mit

- Erregungsmitteln zum Erregen eines mit einem Schwingungsdämpfer (1) verbundenen Fahrzeugrads (2) zum Durchfahren eines Frequenzverlaufs zur Bestimmung der Prüfstandsresonanz,
- Erfassungsmitteln (5) zum Erfassen der Bewegung des erregten Fahrzeugrads (2),
- ersten Berechnungsmitteln (10) zum Ermitteln einer Dämpfungskonstante K des Schwingungsdämpfers (1) anhand der erfassten Amplitude $\hat{x}$ der Bewegung der Aufstandsplatte (7) und einer Bewegung des erregten Fahrzeugrads (2) bzw. der Aufstandsplatte (7) im Resonanzfall ,
- zweiten Berechnungsmitteln (11) zum Ermitteln des Lehr'schen Dämpfungsmaßes $\vartheta$ für die Bedämpfung einer Schwingung der Fahrzeugkarosserie durch den Schwingungsdämpfer (1) anhand der ermittelten Dämpfungskonstante K des Schwingungsdämpfers (1), und einer anteiligen Fahrzeugmasse $m_4$ und eines vorgegebenen Werts für die Resonanzfrequenz des Karosserieaufbaus,

wobei die anteilige Fahrzeugmasse $m_4$ auf eine der beiden folgenden Arten bestimmt ist:

- basierend auf einer Absenkung s der Aufstandsplatte (7) verursacht durch die Belastung mit dem Fahrzeuggrad (2) oder
- basierend auf der halben zulässigen Achslast.

**9.** Vorrichtung nach Anspruch 8 mit einer Aufstandsplatte (7), auf der das Fahrzeugrad (2) aufsteht, und einer Antriebseinheit (4), die über ein elastisches Element (3) mit der Aufstandsplatte (7) verbunden ist, wobei die Aufstandsplatte (7) mit der Antriebseinheit (4) periodisch erregbar ist.

**10.** Vorrichtung nach einem der Ansprüche 8 oder 9 mit einem weiteren elastischen Element (6) , wobei mit den ersten Berechnungsmitteln (10) die Dämpfungskonstante K unter Berücksichtigung der schwingenden Masse m, insbesondere der Masse $m_1$ der Aufstandsplatte (7), und der Federkonstanten der elastischen Elemente (3 u. 6) ermittelbar ist.

**11.** Vorrichtung nach Anspruch 8 bis 10 mit Fahrzeugmassebestimmungsmitteln (16) zum Ermitteln der anteiligen Fahrzeugmasse $m_4$, mit welcher das Rad (2) durch das Fahrzeuggewicht belastet wird.

**12.** Vorrichtung nach Ansprüchen 10 und 11, wobei die Aufstandsplatte (7) über das weitere elastische Element (6) abgestützt ist, und mit den Fahrzeugmassebestimmungsmitteln (16) die anteilige Fahrzeugmasse $m_4$ unter Berücksichtigung der Federkonstanten der elastischen Elemente (3 u. 6) ermittelbar ist.

**13.** Vorrichtung nach einem der Ansprüche 8 bis 12 mit Beurteilungsmitteln (17) zum Beurteilen der Dämpfungseigenschaften des Schwingungsdämpfers (1) durch Vergleich des ermittelten Dämpfungsmaßes mit mindestens einem Grenzwert G.

**14.** Vorrichtung nach einem der Ansprüche 8 bis 13, wobei die ersten Berechnungsmittel (10) eine Korrekturvorrichtung zum Korrigieren des ermittelten Wertes für die Dämpfungskonstante K des Schwingungsdämpfers (1) mit einer Schwingungsdämpfung Kp der Vorrichtung aufweist.

**Claims**

**1.** A method for determining an attenuation measure for vibrations of vehicles, comprising the steps:

- exciting a vehicle wheel (2) connected to a vibration damper (1) to be judged and passing a frequency response characteristic in order to determine the test stand resonance for estimating an attenuation constant $K$ based on the ratio between an amplitude r of the excitation and a detected amplitude $\hat{x}$ of the movement of said vehicle wheel (2) and the footprint plate (7), respectively, in case of resonance, and
- estimating the Lehr attenuation measure $\vartheta$ for the attenuation of a vibration of the vehicle body by means of said vibration damper (1) based on said estimated attenuation constant $K$ of said vibration damper (1) and a proportional vehicle mass $m_4$ acting on said vibration damper (1) and a predetermined value of said resonance frequency of the body structure, wherein

said proportional vehicle mass $m_4$ is determined in one of the two following ways:

- based on a measurement of a lowering s of a footprint plate (7) caused by the loading by said vehicle wheel (2) or
- based on the half of the permissible axle load.

2. The method according to claim 1, wherein said vehicle wheel (2) stands on said periodically excited footprint plate (7), wherein a movement of said footprint plate (7) is detected, and wherein the movement of said excited vehicle wheel (2) is estimated based on said detected movement of said footprint plate (7).

3. The method according to claim 1 or 2, wherein said excitement of said vehicle wheel (2) is performed via an elastic member (3), wherein another elastic member (6) is provided, and wherein said attenuation constant K is estimated considering the vibrating mass $m$, especially the mass $m_1$ of said footprint plate (7), and the spring constant of said elastic members (3 and 6).

4. The method according to one of the claims 1-3, wherein resonance frequencies $\omega_A$ of vibrations of said vehicle structure for different vehicle categories are determined, stored and used to estimate said Lehr attenuation measure $\vartheta$.

5. The method according to one of the claims 1-4, comprising a judgement step for judging the damping characteristics of said vibration damper (1), wherein the estimated attenuation measure is compared with a limit value G.

6. The method according to one of the claims 1-5, comprising a step of correcting said estimated value for said attenuation constant K considering an attenuation with which a testing apparatus attenuates vibrations of said footprint plate (7).

7. The method according to one of the preceding claims, comprising a step of estimating said attenuation constant $K_P$ of said testing apparatus by detecting the amplitude values of the decreasing vibration of said unloaded footprint plate (7) after said excitation is completed, especially by means of the logarithmic decrement of detected vibration amplitudes.

8. An apparatus for determining an attenuation measure for vibrations of vehicles, comprising

- excitation means for exciting a vehicle wheel (2) connected to a vibration damper (1) in order to pass a frequency response characteristic for determining the test stand resonance,
- detection means (5) for detecting the movement of said excited vehicle wheel (2),
- first calculation means (10) for estimating an attenuation constant $K$ of said vibration damper (1) based on the detected amplitude $\hat{x}$ of the movement of the footprint plate (7) and on a movement of said excited vehicle wheel (2) and of said footprint plate (7), respectively, in case of resonance,
- second calculation means (11) for estimating the Lehr attenuation measure $\vartheta$ for the attenuation of the vibration of the vehicle body by means of said vibration damper (1) based on the estimated attenuation constant $K$ of said vibration damper (1) and on a proportional vehicle mass $m_4$ and on a predetermined value for the resonance frequency of the body structure, wherein

said proportional vehicle mass $m_4$ is determined in one of the two following ways:

- based on a measurement of a lowering s of a footprint plate (7) caused by the loading by said vehicle wheel (2) or
- based on the half of the permissible axle load.

9. The apparatus according to claim 8, comprising a footprint plate (7) on which said vehicle wheel (2) stands and a driving unit (4) which is connected to said footprint plate (7) via an elastic member (3), wherein said footprint plate (7) is periodically excitable by means of said driving unit (4).

**10.** The apparatus according to one of the claims 8 or 9, comprising a further elastic member (6), wherein said attenuation constant K can be estimated by means of said first calculation means (10) considering the vibrating mass m, especially the mass $m_1$ of said footprint plate (7), and the spring constant of said elastic members (3 and 6).

**11.** The apparatus according to claim 8 to 10, comprising vehicle mass determination means (16) for determining said proportional vehicle mass $m_4$ with which said wheel (2) is loaded by the vehicle weight.

**12.** The apparatus according to claim 10 and 11, wherein said footprint plate (7) is supported via said further elastic member (6) and said proportional vehicle mass $m_4$ can be estimated by means of said vehicle mass determination means (16) considering said spring constant of said elastic members (3 and 6).

**13.** The apparatus according to one of the claims 8 to 12, comprising judging means (17) for judging the attenuation characteristics of said vibration damper (1) by comparing the estimated attenuation measure with at least one limit value G.

**14.** The apparatus according to one of the claims 8 to 13, wherein said first calculation means (10) comprise a correcting apparatus for correcting said estimated value for said attenuation constant K of said vibration damper (1) by means of a vibration attenuation $K_P$ of said apparatus.

**Revendications**

**1.** Procédé pour déterminer une valeur d'amortissement pour des oscillations de véhicules, comportant les étapes consistant à :

- exciter une roue de véhicule (2) reliée à un amortisseur d'oscillations (1) à évaluer et parcourir une courbe de fréquences pour déterminer la résonance au banc d'essai afin d'obtenir une constante d'amortissement K à l'aide du rapport entre une amplitude r de l'excitation et une amplitude *x* du mouvement de la roue de véhicule (2) ou de la plaque d'appui (7) en cas de résonance, et
- déterminer la valeur d'amortissement d'apprentissage pour l'amortissement d'une oscillation de la carrosserie du véhicule par l'amortisseur d'oscillations (1) à l'aide de la constante d'amortissement K déterminée de l'oscillateur d'oscillations (1), et d'une masse de véhicule proportionnelle $m_4$ qui agit sur l'amortisseur d'oscillations (1) et d'une valeur prédéfinie de la fréquence de résonance de la structure de la carrosserie, dans lequel

la masse de véhicule proportionnelle $m_4$ est déterminée de l'une' des deux manières suivantes :

- à partir d'une mesure d'un abaissement s d'une plaque d'appui (7), causé par la charge représentée par la roue de véhicule, ou '
- à partir de la demi-charge sur essieu admissible.

**2.** Procédé selon la revendication 1 dans lequel la roue de véhicule (2) se tient sur la plaque d'appui (7) excitée périodiquement, un mouvement de la plaque d'appui (7) est détecté et le mouvement de la roue de véhicule (2) excitée est déterminé à l'aide du mouvement détecté de la plaque d'appui (7).

**3.** Procédé selon l'une quelconque des revendications 1 ou 2, dans lequel on produit l'excitation de la roue de véhicule (2) par l'intermédiaire d'un élément élastique (3), il est prévu un autre élément élastique (6) et on détermine la constante d'amortissement K en tenant compte de la masse oscillante m, en particulier de la masse $m_1$ de la plaque d'appui (7) et des constantes de ressort des éléments élastiques (3 et 6).

**4.** Procédé selon l'une quelconque des revendications 1 à 3, dans lequel on détermine des fréquences de résonance $\omega_A$ pour des oscillations de la carrosserie du véhicule pour différentes catégories de véhicule, on les mémorise et on les utilise pour déterminer la valeur d'amortissement d'apprentissage

**5.** Procédé selon l'une quelconque des revendications 1 à 4 avec une étape d'évaluation pour évaluer les caractéristiques d'amortissement de l'amortisseur d'oscillations (1), étant la valeur d'amortissement déterminé étant comparée à une valeur limite G.

**6.** Procédé selon l'une quelconque des revendications 1 à 5 avec une étape pour corriger la valeur déterminée de la constante d'amortissement K en tenant compte d'un amortissement avec lequel un dispositif d'essai amortit des oscillations de la plaque d'appui (7).

7. Procédé selon l'une quelconque des revendications 1 à 6 avec une étape pour déterminer les constantes d'amortissement Kp du dispositif d'essai par relevé des valeurs d'amplitude de l'oscillation évanescente de la plaque d'appui (7) non chargée après la fin de l'excitation, en particulier au moyen du décrément logarithmique des amplitudes d'oscillation enregistrées.

8. Dispositif pour déterminer une valeur d'amortissement pour des oscillations de véhicules comportant :

- des moyens d'excitation pour exciter une roue de véhicule (2) reliée à un amortisseur d'oscillations (1) afin de parcourir une courbe de fréquences en vue de la détermination de la résonance du banc d'essai,
- des moyens de détection (5) pour détecter le mouvement de la roue de véhicule (2) excitée,
- des premiers moyens de calcul (10) pour déterminer une constante d'amortissement K de l'amortisseur d'oscillations (1) à l'aide de l'amplitude $x$ détectée du mouvement de la plaque d'appui (7) et d'un mouvement de la roue de véhicule (2) excitée ou de la plaque d'appui (7) en cas de résonance,
- des seconds moyens de calcul (11) pour déterminer le coefficient d'amortissement d'apprentissage pour l'amortissement d'une oscillation de la carrosserie du véhicule par l'amortisseur d'oscillations (1) à l'aide de la constante d'amortissement K déterminée de l'amortisseur d'oscillations (1) et d'une masse proportionnelle de véhicule $m_4$ et d'une valeur prédéfinie de la fréquence de résonance de la structure de la carrosserie,

dans lequel la masse proportionnelle de véhicule $m_4$ est déterminée de l'une des deux manières suivantes :

- à partir d'un abaissement s de la plaque d'appui (7), causé par la charge représentée par la roue de véhicule, ou
- à partir de la demi-charge sur essieu admissible.

9. Dispositif selon la revendication 8 avec une plaque d'appui (7) sur laquelle se tient la roue de véhicule (2) et avec une unité d'entraînement (4) qui est reliée à travers un élément élastique (3) à la plaque d'appui (7), la plaque d'appui (7) pouvant être périodiquement excitée par l'unité d'entraînement (4).

10. Dispositif selon l'une quelconque des revendications 8 ou 9 avec un autre élément élastique (6), dans lequel la constante d'amortissement K peut être déterminée, avec les premiers moyens de calcul (10), en tenant compte de la masse m oscillante, en particulier de la masse $m_1$ de la plaque d'appui (7), et des constantes de ressort des éléments élastiques (3 et 6).

11. Dispositif selon l'une quelconque des revendications 8 à 10 avec des moyens (16) de détermination de masse du véhicule pour déterminer la masse proportionnelle de véhicule $m_4$ avec laquelle la roue (2) est chargée par le poids du véhicule.

12. Dispositif selon les revendications 10 et 11 dans lequel la plaque d'appui (7) est soutenue par l'autre élément élastique (6), on peut déterminer la masse proportionnelle de véhicule $m_4$ avec les moyens (16) de détermination de la masse du véhicule, en tenant compte des constantes de ressort des éléments élastiques (3 et 6).

13. Dispositif selon l'une quelconque des revendications 8 à 12 avec des moyens d'évaluation (17) pour évaluer des propriétés d'amortissement de l'amortisseur d'oscillations (1) par comparaison entre la valeur d'amortissement déterminée et au moins une valeur limite G.

14. Dispositif selon l'une quelconque des revendications 8 à 13 dans lequel les premiers moyens de calcul (10) comportent un dispositif de correction pour corriger la valeur déterminée de la constante d'amortissement K de l'amortisseur d'oscillation (1) avec un amortissement d'oscillation Kp du dispositif.

Fig. 1

Fig. 2

Fig. 3

Fig. 4

Fig. 5

Dämpfergeschwindigkeit [m/s]

Fig. 6

Fig. 7

Fig. 8

Beginn

100 — Ermittle anteilige Fahrzeugmasse m4

110 — Errege Aufstandsplatte

120 — Erfasse Bewegung der Aufstandsplatte

130 — Bestimme Dämpfungskonstante K

140 — Kompensiere Prüfstandsverluste

150 — Bestimme Dämpfungsmaß $\vartheta$

160 — $\vartheta < G$    Nein    Ja

170 — Dämpfer defekt

180 — Dämpfer in Ordnung

Ende

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1232372
- DE 10143492

- DE 4439997